# EUROPÄISCHE PATENTSCHRIFT

(11) **EP 0 673 395 B1**
(45) Veröffentlichungstag und Bekanntmachung des Hinweises auf die Patenterteilung: **12.02.1997**
(21) Anmeldenummer: 94901915.2
(22) Anmeldetag: 30.11.1993
(51) Int. Cl.: C08F 216/20, C14C 9/00

(54) **COPOLYMERISATE UND IHRE VERWENDUNG ZUR BEHANDLUNG VON LEDER**
COPOLYMERS AND THEIR USE IN THE TREATMENT OF LEATHER
COPOLYMERISATS ET LEUR UTILISATION DANS LE TRAITEMENT DU CUIR

(30) Priorität: 12.12.1992 DE 4242039
(43) Veröffentlichungstag der Anmeldung: 27.09.1995
(73) Patentinhaber: Chemische Fabrik Stockhausen GmbH, D-47805 Krefeld (DE)
(72) Erfinder: BREHM, Helmut, D-47800 Krefeld (DE); STRIJBOS, Leonardus, D-47918 Tönisvorst (DE); EIKMEIER, Hans-Bernhard, D-47906 Kempen (DE)
(74) Vertreter: Klöpsch, Gerald, Dr.-Ing. Patentanwalt
(86) Internationale Anmeldenummer: EP9303350
(87) Internationale Veröffentlichungsnummer: WO9413716

(56) Entgegenhaltungen:
- EP-A- 0 372 746
- EP-A- 0 498 634
- DE-A- 3 931 039
- US-A- 4 338 239

## Beschreibung

Die Erfindung betrifft Copolymere, die aufgebaut sind aus ethylenisch ungesättigten, Säuregruppen tragenden Monomeren, ethylenisch ungesättigten Glycerinderivaten und gegebenenfalls weiteren mit den vorstehenden Monomeren copolymerisierbaren ethylenisch ungesättigten Monomeren sowie die Verwendung dieser Copolymerisate zur Behandlung von Leder.

Fettungsmittel für die Leder- und Pelzherstellung werden u. a. durch Einführung von Sulfonat- und/oder Sulfatgruppen in ungesättigte Öle und Fette hergestellt. Hierdurch erhält man wasserlösliche oder in Wasser emulgierbare Verbindungen, die ggf. zusammen mit weiteren Hilfsmitteln, z. B. Emulgatoren oder nicht sulfierten Ölen, in der Lickerflotte eingesetzt werden.

Neben diesen Fettungsmitteln, deren Basis weitgehend natürliche Fettstoffe wie Fischöl und Lardöl sind, werden auch Polymere in gelöster oder dispergierter Form zur Behandlung von Leder eingesetzt. Die DE-A-3931039 beschreibt die Verwendung von Copolymerisaten aus langkettigen, hydrophoben und hydrophilen Monomeren zum Hydrophobieren von Leder und Pelzfellen. Die Copolymerisate, die in teilneutralisierter Form in Wasser dispergiert eingesetzt werden, enthalten als hydrophobe Monomere 50 bis 90 Gew.-% C8-C40-Alkyl(meth)-acrylate, Vinylester von C8-C40-Carbonsäuren und als bevorzugte hydrophile Monomere 10 bis 50 Gew-% Acrylsäure, Methacrylsäure, Maleinsäure, Maleinsäureanhydrid, Itakonsäure und Itakonsäureanhydrid.

Die EP-A-0372746, die ausführlich auf die in der Literatur vorgeschlagenen Polymeren zur Behandlung von Leder eingeht, beansprucht eine wäßrige Dispersion eines Copolymeren zum Nachgerben, Fetten und Hydrophobieren von Leder. Das beanspruchte Copolymere besteht aus 10 bis 50 Gew.-% eines hydrophilen Monomeren und aus 50 bis 90 Gew.-% eines hydrophoben Comonomeren. Als hydrophile Monomere werden die bekannten monoethylenisch ungesättigten Mono- und Dicarbonsäuren eingesetzt. Die zur Herstellung der Copolymeren verwendeten hydrophoben Monomeren sind C8-C22-Ester der Acryl- und Methacrylsäure, Alkene und Vinylester langkettiger Carbonsäuren.

Eingesetzt werden die Copolymeren zur Behandlung von üblich gegerbten Häuten, z. B. mit Mineralgerbstoffen wie Chrom(III-)salzen gegerbten Häuten. Dazu wird die Haut nach dem Waschen entsäuert und nach nochmaligem Waschen mit einer wäßrigen Dispersion, die 1 bis 10 Gew.-% Copolymer - bezogen auf das Gewicht des gegerbten Leders - enthäl, bei 30 bis 50 °C im Faß gewalkt. Die Flottenlänge beträgt üblicherweise 100 %, d. h. das Gewichtsverhältnis von Behandlungsflüssigkeit zum Falzgewicht des Leders beträgt 1 : 1. Nach 0,5 bis zwei Stunden Walkzeit wird das Copolymere durch Zugabe einer 10%igen Ameisensäurelösung in der Haut fixiert.

Die Restflotte wird nun abgelassen und die Haut nochmals mit Wasser gewaschen.

Auch bei optimal gewählter Menge an Copolymer in der Flotte, d. h. einer Menge, die in bezug auf das Falzgewicht eben noch ein weiches, geschmeidiges Leder ergibt, enthält die Restflotte, d. h. die Flüssigkeit, die nach der Behandlung des Leders verworfen wird, nicht ausgenutztes Behandlungsmittel. Es ist daher eine Aufgabe, Copolymere zur Behandlung, insbesondere zur Weichmachung von Leder bereitzustellen, die besser ausgezehrt werden, um so eine Entlastung der Abwässer aus der Lederbehandlung zu erreichen.

Die Aufgabe wird erfindungsgemäß durch Verwendung von Copolymeren gelöst, die
a) 20 bis 60 Gew.-% ethylenisch ungesättigte, säuregruppentragende Monomere
b) 40 bis 80 Gew.-% ethylenisch ungesättigter Glycerinderivate der allgemeinen Formel (1) 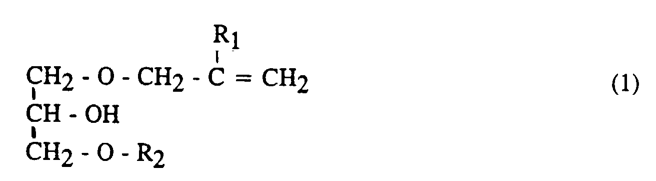 mit
   - R₁ =: H, Methyl
   - R₂ =: C₁₂-C₂₄-Alkyl, C₁₂-C₂₄-Alkylaryl C₁₂-C₄₀-Acyl
und
c) 0 bis 30 Gew.-% andere, mit den Monomeren a) und b) copolymerisierbare, ethylenisch ungesättigte Monomere einpolymerisiert enthalten und in zumindest teilneutralisierter Form zur Behandlung von Leder und Pelzen eingesetzt werden, wobei die Summe der Monomere a + b + c = 100 beträgt.

Die Verwendung der oben unter a) und b) angegebenen Monomeren zur Herstellung von Copolymeren ist bekannt. Die US-A-4338239 beschreibt ein Verdikkungsmittel für polare organische Lösungsmittel und wäßrige Systeme, das mindestens 60 Gew.-% der Monomeren der Gruppe a) und 0,2 bis 20 Gew.-% der Monomeren der Gruppe b) enthält. Diese Copolymeren sind zur Fettung von Leder nicht geeignet. Die erfindungsgemäßen, zur Weichmachung von Leder geeigneten Copolymeren enthalten 20 bis 60 Gew.-% ethylenisch ungesättigte, säuregruppentragende Monomere der Gruppe a), wie Acrylsäure, Methacrylsäure, Dimethylacrylsäure, Maleinsäure, Fumarsäure, Monoalkylmaleinat, Monoalkylglykolmaleinat, (Meth-)Allylsulfonsäure, Acrylamidomethylpropansulfonsäure, Allylphosphonsäure sowie Mischungen dieser Monomeren.

Zur Gruppe b) gehören polymerisierbare Glycerinderivate, die mit 40 bis 80 Gew.-% bei der Copolymerisation eingesetzt werden. In diesen Glycerinderivaten ist eine Hydroxylgruppe des Glycerins nicht substituiert, eine Hydroxylgruppe ist mit (Meth)Allylalkohol verethert und die dritte Hydroxylgruppe ist mit einem C12-C24-Alkohol bzw. C12-C24-Alkylphenol verethert oder mit einer C12-C40-Monocarbonsäure verestert.

Hergestellt werden die ethylenisch ungesättigten Glycerinderivate durch Umsetzung von (Meth-)Allylglycidether in Gegenwart von Alkali oder Lewissäuren mit C12-C24-Fettalkoholen, wie Dodecylalkohol, Isotridecylalkohol, Talgfettalkohol, sowie mit Alkoholen aus der Oxosynthese. Ebenfalls zur Umsetzung mit (Meth)-Allylglycidether geeignet sind beispielsweise Dinonylphenol und Dodecylphenol. Zur Bildung der Ester des Glycerin-(meth-)allylethers werden C12-C40-Fettsäuren, wie Laurinsäure, Palmitinsäure, Myristinsäure und Stearinsäure, mit (Meth)-Allylglycidether umgesetzt. Einsetzbar als Monomere der Gruppe b) sind auch Gemische der Glycerinallyletherderivate.

Die Copolymerisate aus den Monomeren der Gruppen a) und b) können ggf. durch Copolymerisation in Gegenwart von maximal 30 Gew.-% der Monomeren der Gruppe c) modifiziert werden. Zu den Monomeren der Gruppe c) gehören z. B. cl) hydrophobe Monomere wie C8-C24-Ester oder C8-C26-Amide der (Meth)-Acrylsäure, Vinylester von C8-C24-Carbonsäuren, C10-C18- -Olefine und/oder c2) C1-C8-Ester oder Amide der (Meth-)Acrylsäure, Hydroxi-C2-C4-Ester der (Meth-)Acrylsäure, Di-C1-C6-Alkylester der Maleinsäure, Styrol, Alkylstyrol und Vinylester der C1-C8-Carbonsäuren.

Die Herstellung der Copolymeren erfolgt nach bekannten Polymerisationsverfahren. Bevorzugt wird zur Copolymerisation der Monomeren der Gruppe a), b) und ggf. c) das Zulaufverfahren angewandt, d. h, daß die nur träge polymerisierende Monomeren im Reaktor vorgelegt und die reaktiveren Monomeren sowie das Katalysatorsystem über einen längeren Zeitraum verteilt zudosiert werden.

Wird die Polymerisation in Gegenwart eines inerten organischen Verdünnungsmittels durchgeführt, so wird bevorzugt ein Verdünnungsmittel wie Butylglykol gewählt, das nach der Polymerisation nicht abgetrennt werden muß.

Zur Auslösung der Polymerisation werden die üblichen Initiatorsysteme wie Azoverbindungen, Redoxsysteme und Peroxiverbindungen wie bevorzugt Tertiär-Butylperoxid, Tertiär-Butylperoxipivalat, Dicyclohexylperoxidicarbonat, Cumolhydroperoxid allein oder in Mischung untereinander, ggf. verdünnt, dem Polymerisationsansatz zugesetzt. Das Molekulargewicht bzw. die Viskosität der Copolymeren gleicher Zusammensetzung kann nicht nur über die Reaktionstemperatur, die im Bereich 80 bis 200 °C liegt, und über die Katalysatormenge, beeinflußt werden, sondern auch mit Hilfe von Reglern, wie SH-Gruppen tragende organische Verbindungen, die gleichzeitig die Funktion einer Redoxkomponente im Katalysatorsystem erfüllen können. Als Regler seien beispielhaft 2-Mercaptoethanol, Thioglykolsäure und Dodecylmercaptan genannt.

Nach der Polymerisation und ggf. Abtrennung von Lösungs-/Verdünnungsmitteln werden die sauren Copolymerisate gegebenenfalls durch Neutralisation von mindestens 20 % der Carboxylgruppen mit einer verdünnten Base, wäßriger Ammoniaklösung oder wäßriger Alkalihydroxidlösung, in eine in Wasser dispergierbare Form gebracht.

Die Erfindung wird durch die folgenden Beispiele näher erläutert:

### Beispiel 1

### Herstellung des Monomeren A

559 g Alfol® 1618 (Fa. Condea) werden in einem Rührkolben vorgelegt und mit 10 g einer 25%igen Lösung von Kaliummethylat in Methanol versetzt. Während des Aufheizens auf 140 °C wird - unterstützt durch einen schwachen Stickstoffstrom - Methanol abdestilliert. Nach Zugabe von 228 g Allylglycidether läßt man vier Stunden bei ca. 140 °C reagieren.

### Beispiel 2

### Herstellung des Monomeren B

632 g Stearinsäure werden wie in Beispiel 1 mit 229 g Allylglycidether umgesetzt.
SZ: 15.

### Beispiele 3 bis 8

### Herstellung der Copolymeren

67 g Butylglykol, 0,6 g Ditertiärbutylperoxid (DTBP) und 130 g Monomeres A oder B werden in einem Rührkolben mit Destillationsaufsatz vorgelegt und auf 135 bis 140 °C aufgeheizt. Innerhalb dieser Temperaturgrenzen wird die Polymerisation unter Zulauf der in Tabelle 1 aufgeführten Komponenten in zwei Stunden durchgeführt.

Zur Nachreaktion setzt man 1 g DTBP nach und rührt eine Stunde bei ca. 135 °C. Nach dem Abkühlen auf 80 °C wird der Ansatz mit einer Mischung aus Wasser und 45%iger Natronlauge bei 50 °C verrührt, so daß die Emulsion einen pH-Wert von 7 bis 7,5 (gemessen in einer Verdünnung von 1 : 4) und einen Gehalt an teilneutralisiertem Polymer von 35 Gew.-% hat.

**Tabelle 1**

| Beispiel | 3 | 4 | 5 | 6 | 7 | 8 |
|---|---|---|---|---|---|---|
| Monomer A (g) | 130 | 130 | 130 | 130 | - | - |
| Monomer B (g) | - | - | - | - | 130 | 130 |
| Acrylsäure (g) | 70 | 70 | 70 | 53 | - | 7 |
| Zulauf 1 | | | | | | |
| Methacrylsäure (g) | - | - | - | - | 84 | - |
| Zulauf 1 | | | | | | |
| DTBP (g) Zulauf 2 | 8,4 | 16,8 | 8,4 | 8,4 | 16,8 | 16,8 |
| Mercaptoethanol (g) | 3,0 | 3,0 | 6,1 | 3,0 | 1,0 | 3,0 |
| | | | | | | |
| Zulauf 3 | | | | | | |
| Butylglykol (g) | 13,4 | 13,4 | 8,4 | 3,4 | 13,4 | 13,4 |
| | | | | | | |
| Zulauf 3 | | | | | | |
| Viskosität vor der | | | | | | |
| Neutralisation bei | 7000 | 900 | 1800 | 500 | 256 x | 1800 |
| | | | | | | |
| 40 °C (mPa.s) | | | | | 10³ | |

### Beispiel 9

72 g Butylglykol, 0,6 g DTBP werden im Rührkolben auf 140 °C aufgeheizt. In den Kolben trägt man mittels Dosierpumpen innerhalb von zwei Stunden drei separate Stoffströme bei 135 bis 140 °C ein. Zulauf 1: 70,2 g Acrylsäure vermischt mit 130 g Monomerem B; Zulauf 2: 6,1 g Mercaptoethanol; Zulauf 3: 8,4 g DTBP gelöst in 8,4 g Butylglykol. 30 Minuten nach beendetem Zulauf wird 1 g DTBP nachgesetzt und eine Stunde lang bei 135 °C gerührt. Produktviskosität bei 40 °C: 1200 mPa.s. Zur Neutralisation kühlt man den Ansatz auf ca. 50 °C ab und vermischt mit 277 g Wasser, das 57 g 45%ige Natronlauge enthält.

### Beispiel 10 (Vergleichspolymer)

140 g Butylglykol werden im Rührkolben vorgelegt und auf 135 °C aufgeheizt. Innerhalb von zwei Stunden dosiert man eine Mischung aus 247,5 g Methacrylsäure-C16/18-ester, 106 g Acrylsäure und 17,7 g Dodecylmercaptan sowie parallel dazu 14,8 g DTBP. Während des Zulaufs steigt die Polymerisationstemperatur auf 145 °C an. 30 Minuten nach beendetem Monomerenzulauf werden 1,7 g DTBP nachgesetzt und anschließend eine Stunde bei 135 °C gerührt. Man kühlt den Ansatz auf 80 °C ab und trägt die Ölphase zügig unter Rühren in eine Mischung aus 85,2 g 45%ige Natronlauge und 458 g Wasser ein. Der pH-Wert beträgt-gemessen in einer 1:4-Verdünnung-7,3.

### Anwendung

Behandelt werden nachgegerbte Rindhäute (wet-blue) der Falzstärke 1,0 bis 1,1 mm. Die Prozentangaben beziehen sich auf das Falzgewicht.

### A) Neutralisation

| | |
|---|---|
| 200 % Wasser 35 °C | |
| 2 % Natriumformiat | 30 Minuten |
| 2 % Tanigan® PC¹ | |
| 1 % Natriumhydrogencarbonat | 45 Minuten |
| 2 % Tanigan® BN¹ | 30 Minuten |
| Flotte A ablassen | |
| Spülen 60 °C | 5 Minuten |

| | |
|---|---|
| ¹ Fa. Bayer AG | |

### B) Fettung

100 % Wasser 60 °C

| | | |
|---|---|---|
| Beispiel 11 | 12 % Produkt aus Beispiel 4 | 45 Minuten |
| Beispiel 12 | 12 % Produkt aus Beispiel 5 | 45 Minuten |
| Beispiel 13 | 12 % Produkt aus Beispiel 8 | 45 Minuten |
| Beispiel 14 | 12 % Produkt aus Beispiel 9 | 45 Minuten |
| Beispiel 15 (Vergleich) | 12 % Produkt aus Vergleich 10 | 45 Minuten |
| | 1 % Ameisensäure | 30 Minuten |
| | Flotte B ablassen | |

Die Restflotten B aus der Lederfettung nach Beispiel 11 bis 14 und Vergleichsbeispiel 15 werden optisch verglichen und ihr Gehalt an organischer Substanz als TOC-Wert (Total Organic Carbon) angegeben (siehe Tabelle 2).

**Tabelle 2**

| | | | | | |
|---|---|---|---|---|---|
| Restflotte B | 11 | 12 | 13 | 14 | 15 |
| aus Beispiel | | | | | (Vergleich) |
| Aussehen | klar | klar | klar | klar | weiß-trüb |
| TOC(g/l) | 3,2 | 3,7 | 3,0 | 3,4 | 6,1 |

Die Widerstandsfähigkeit von Leder gegen Wasser, z. B. Regentropfen oder verschüttete Flüssigkeit, wird durch einen einfachen Tropfentest bestimmt. Auf die Narbenseite des Leders wird ein Wassertropfen gegeben und die Zeit in Minuten bestimmt, in der die Feuchtigkeit in das Leder eingedrungen ist.

Die Weichheit bzw. der "Griff" des Leders ist objektiv nicht meßbar. Nur der Fachmann ist in der Lage, Leder mit Noten von 1 = sehr gut und 5 = schlecht zu beurteilen.

Die Lichtechtheit der Leder wird nach DIN 75202 bestimmt.

**Tabelle 3**

| | | | | | | | |
|---|---|---|---|---|---|---|---|
| Fettungsmittel aus Beispiel | 3 | 4 | 5 | 6 | 7 | 8 | 9 |
| Tropfentest (min) | 35 | 50 | 65 | 70 | 70 | 15 | 17 |
| Weichheit | 2-3 | 2 | 3-4 | 3 | 3 | 2-3 | 2 |
| Lichtechtheit | 3-4 | 3-4 | 3 | 4 | 3-4 | 3-4 | 4 |

## Patentansprüche

1. Copolymere, die aufgebaut sind aus
a) 20 bis 60 Gew.-% ethylenisch ungesättigten, säuregruppentragenden Monomeren,
b) 40 bis 80 Gew.-% ethylenisch ungesättigten Glycerinderivaten, in denen eine Hydroxylgruppe des Glycerins nicht substituiert ist, eine Hydroxylgruppe mit (Meth-) Allylalkohol verethert ist und die dritte Hydroxylgruppe mit einem C12-C24-Alkohol bzw. C12-C24-Alkylphenol verethert oder mit einer C12-C40-Monocarbonsäure verestert vorliegt
und
c) 0 - 30 Gew.-% anderen, mit den Monomeren a) und b) copolymerisierbare, ethylenisch ungesättigten Monomeren, wobei die Summe der Monomeren a + b + c = 100 beträgt.

2. Copolymere nach Anspruch 1, dadurch gekennzeichnet, daß gegebenenfalls mindestens 20 % der Säuregruppen mit wäßriger Ammoniaklösung oder wäßriger Alkalihydroxidlösung neutralisiert sind.

3. Verwendung der Copolymeren nach Anspruch 1 und 2 zur Behandlung von gegerbtem Leder.

4. Verwendung der Copolymeren nach Anspruch 3, dadurch gekennzeichnet, daß mindestens 1 % der Copolymeren bezogen auf das Gewicht des gegerbten Leders in wäßriger Dispersion eingesetzt werden.

5. Verwendung der Copolymeren nach Ansprüchen 3 - 4, dadurch gekennzeichnet, daß das gegerbte Leder nach dem Waschen, Neutralisieren und nochmaligem Waschen mit einer Dispersion, die 1 bis 10 Gew. % Copolymer, bezogen auf das Gewicht des gegerbten Leders, enthält im Faß bei einem Gewichtsverhältnis von Behandlungsflüssigkeit zum Falzgewicht des Leders von 1:1 0,5 - 2 Stunden gewalkt und danach das Copolymer durch Zugabe von wäßriger Ameisensäure im Leder fixiert wird.

## Claims

1. Copolymers built up of
a) 20 to 60%-wt. of ethylenically unsaturated, acid groups-containing monomers,
b) 40 to 80%-wt. of ethylenically unsaturated glycerol derivatives wherein one hydroxyl group of the glycerol is unsubstituted, one hydroxyl group is etherified with (meth-)allyl alcohol, and the third hydroxyl group is etherified with a C12-C24-alcohol or C12-C24-alkyl phenol or esterified with a C12-C40-monocarboxylic acid,
and
c) 0 - 30%-wt. of other ethylenically unsaturated monomers copolymerizable with monomers a) and b), wherein the sum of monomers a + b + c = 100.

2. Copolymers according to claim 1 characterized in that at least 20% of the acid groups are optionally neutralized with aqueous ammonia solution or aqueous alkali hydroxide solution.

3. The use of the copolymers according to claims 1 and 2 for the treatment of tanned leather.

4. The use of the copolymers according to claim 3 characterized in that at least 1% of the copolymers, relative to the weight of the tanned leather, is used in aqueous dispersion.

5. The use of the copolymers according to claims 3 - 4 characterized in that the tanned leather, after washing, neutralizing and renewed washing with a dispersion comprising 1 to 10%-wt. of copolymer, relative to the weight of the tanned leather, is milled in a drum at a weight ratio of treatment liquid to shaved weight of the leather of 1:1 for 0.5 - 2 hours, and that the copolymer is then fixed in the leather by adding aqueous formic acid.

## Revendications

1. Copolymères qui sont constitués de
a) 20 à 60% en poids de monomères éthyléniquement insaturés, portant des radicaux acide,
b) 40 à 80% en poids de dérivés de la glycérine éthyléniquement insaturés, dans lesquels un radical hydroxyle de la glycérine n'est pas substitué, un radical hydroxyle de la glycérine est éthérifié avec de l'alcool (méth)allylique et le troisième radical hydroxyle de la glycérine est éthérifié avec un alcool en C₁₂-C₂₄, ou un alkyl(C₁₂-C₂₄)-phénol, ou est estérifié avec un acide monocarboxylique en C₁₂-C₄₀,
et
c) 0 à 30% en poids d'autres monomères éthyléniquement insaturés et copolymérisables avec les monomères a) et b), où la somme des monomères a + b + c est égale à 100.

2. Copolymères suivant la revendication 1, caractérisés en ce qu'éventuellement au moins 20% des radicaux acide sont neutralisés avec une solution aqueuse d'ammoniac ou une solution aqueuse d'un hydroxyde de métal alcalin.

3. Utilisation des copolymères suivant la revendication 1 ou la revendication 2 pour le traitement du cuir tanné.

4. Utilisation des copolymères suivant la revendication 3, caractérisée en ce qu'au moins 1% des copolymères par rapport au poids du cuir tanné s'utilise en dispersion aqueuse.

5. Utilisation des copolymères suivant les revendications 3 à 4, caractérisée en ce que, après lavage, neutralisation et relavage, on foulonne le cuir tanné dans le foulon avec une dispersion qui contient, par rapport au poids du cuir tanné, 1 à 10% en poids de copolymère, sous un rapport pondéral du liquide de traitement au poids du cuir dérayé de 1:1, pendant 0,5 à 2 heures et on fixe ensuite le copolymère dans le cuir par addition d'acide formique aqueux.
